# EUROPÄISCHE PATENTSCHRIFT

(11) **EP 2 596 270 B1**
(45) Veröffentlichungstag und Bekanntmachung des Hinweises auf die Patenterteilung: **24.02.2021**
(21) Anmeldenummer: 11734148.7
(22) Anmeldetag: 22.07.2011
(51) Int. Cl.: F16L 7/00, H02G 1/08, G02B 6/44, F17D 1/04, F16L 39/00, H02G 9/06

(54) **LEITUNGSSYSTEM**
LINE SYSTEM
SYSTÈME DE CONDUITES

(30) Priorität: 22.07.2010 DE 102010031978
(43) Veröffentlichungstag der Anmeldung: 29.05.2013
(73) Patentinhaber: Aliaxis Deutschland GmbH, 68229 Mannheim (DE)
(72) Erfinder: SCHNIER, Gerold, 27801 Dötlingen-Klattenhof (DE); HARMS, Reimo, 26209 Hatten (DE); BÜSSELMANN, Norbert, 26919 Brake (DE); MAIER, Fabian, 67368 Westheim (DE)
(74) Vertreter: 24 IP Law Group France
(86) Internationale Anmeldenummer: PCT/EP2011/062626
(87) Internationale Veröffentlichungsnummer: WO 2012/010689

(56) Entgegenhaltungen:
- EP-A1- 0 795 942
- EP-A2- 1 229 369
- DE-A1- 19 734 274
- GB-A- 2 463 372
- US-A1- 2002 114 595
- US-A1- 2003 068 143

## Beschreibung

Die Erfindung betrifft ein Leitungssystem, mit einer ersten Hausanschlussleitung, die als Rohrleitung ausgeführt ist, durch die ein Gas oder Wasser geführt wird und einer zweiten Leitung, wobei der Außendurchmesser der zweiten Leitung geringer ist als der Innendurchmesser der Hausanschlussleitung, wobei die erste, äußere Hausanschlussleitung und die zweite, innere Leitung durch ein Verbindungsstück zu einer kombinierten Leitung zusammengeführt sind und als kombinierte Leitung an einem weiteren Verbindungsstück wieder heraustreten, wobei die kombinierte Leitung an ihren beiden Enden jeweils an ein Verbindungsstück angeschlossen ist, wobei die zweite Leitung in der Hausanschlussleitung geführt wird, wobei die erste, äußere Hausanschlussleitung und die zweite, innere Leitung durch die Verbindungsstücke an ihren Enden der Leitungen miteinander verbunden sind und durch die Hausanschlussleitung Gas oder Wasser geführt wird und durch die zweite Leitung ein Medium oder eine Telefonleitung, beispielsweise aus Kupfer oder Glasfaser, geführt wird, wobei das Verbindungsstück aufweist: einen ersten Anschluss zum Anschließen der kombinierten Leitung bestehend aus der Hausanschlussleitung und der zweiten Leitung, einen zweiten Anschluss zum Anschluss an die Hausanschlussleitung des ersten Anschlusses, und einen dritten Anschluss zum Anschluss an die zweite Leitung des ersten Anschlusses.

Im Allgemeinen wird in diesem Zusammenhang auf den Stand der Technik gemäß DE 85 26 424 U1, DE 23 38 209 A1, DE 10 2004 021 667 A1, DE 39 28 632 A1, GB 2463 372A sowie DIN EN 60794-3-60 (VDE 0888-360) verwiesen.

Es ist bisher bekannt, Netzanschlüsse in leitungsgebundenen Versorgungsbereichen wie z.B. Gas oder Wasser in separaten Rohrleitungen für jedes Medium auszuführen, d.h. separate Rohrleitungen für die Gas- und Wasserversorgung oder auch die Abwasserentsorgung vorzusehen. Ebenso werden die Netzanschlüsse für z.B. elektrischen Strom, Telefonanschluss oder Kabelfernsehen über separate Leitungen vorgesehen.

Den zuvor beschriebenen Leitungen ist dabei gemeinsam, dass sie bei einem Neuanschluss der entsprechenden Versorgung durch Tiefbauarbeiten verlegt werden müssen. Ist diese Verlegung abgeschlossen, so liegen diese Leitungen unter der Erde, so dass eine Erweiterung der Versorgung z.B. durch die Ergänzung einer weiteren Leitung zum Kabelfernsehen oder ein Austausch einer z.B. kupferkabelgeführten Signalübertragung durch eine glasfasergeführte Signalübertragung nur dadurch durchgeführt werden kann, dass die Leitungsversorgung auf ihrer gesamten Länge vom Gebäude des Anschlussnehmers bis zum Anschluss des Versorgungsnetzbetreibers durch erneute Tiefbauarbeiten vollständig freigelegt werden muss. Dies gilt ebenso für eine Reparatur der Leitungen in Bereichen, die nur durch Tiefbauarbeiten zugänglich sind.

Das Freilegen der Leitungen führt in jedem Fall zu erheblichen Kosten durch die Tiefbauarbeiten. Ferner stellen derartige Tiefbauarbeiten eine erhebliche Belästigung für den Anschlussnehmer dar, da durch die Tiefbauarbeiten z.B. die Gartenanlagen des Anschlussnehmers beschädigt oder teilweise sogar zerstört werden können und dies Neuanpflanzungen erforderlich macht, die zu weiteren Kosten führen. Ferner kann der Zugang zum Grundstück und Gebäude des Anschlussnehmers durch die Tiefbauarbeiten zeitweise beeinträchtigt sein. Ist im Rahmen der Tiefbauarbeiten auch eine Eröffnung der Straße nötig, an der das Gebäude des Anschlussnehmers liegt, können sich auch Beeinträchtigungen in der Verkehrsführung und dem Parkplatzangebot für den Anschlussnehmer sowie weitere Verkehrsteilnehmer, insbesondere die Nachbarschaft, ergeben.

Bei einer notwendigen Reparatur einer bereits vorhandenen leitungsgebundenen Versorgung wird ein Anschlussnehmer diese Beeinträchtigungen wohl hinnehmen müssen, um seine Versorgung wieder herzustellen. Erwägt ein Anschlussnehmer jedoch die Erweiterung oder Verbesserung seiner Versorgung, könnten diese unvermeidlichen Belästigungen den Anschlussnehmer eventuell davon abhalten, diese Maßnahmen durchführen zu lassen, d.h. der Anschlussnehmer würde auf die Erweiterung oder Verbesserung seiner Anschlussleistungen verzichten. Hierdurch könnte der Versorgungsnetzbetreiber seine weiteren Leistungen nachträglich nicht mehr erfolgreich anbieten oder zumindest nur unwirtschaftlich, z.B. durch die Übernahme der Anschlusskosten inklusive der Behebung der Beschädigung der Gartenanlagen.

Aus der US 2002/0114595 A1 ist ein Verfahren bekannt, mit dem eine Datenleitung in einer bestehenden Hausanschlussleitung verlegbar ist. Dabei wird eine flexible Datenleitung an einem ersten Verbindungsstück in einem flachen Winkel in die Hausanschlussleitung eingeführt und an einem zweiten Verbindungsstück wieder aus der Hausanschlussleitung herausgeführt. Zum Einbringen der flexiblen Datenleitung ist vorgesehen, diese mittels eines Ballons und einem in der Hausanschlussleitung strömenden Fluid von dem einen Verbindungsstück zu dem anderen Verbindungsstück zu fördern. Die Ausbildung der Verbindungsstücke beschränkt das Verfahren dabei auf flexible Leitungen, wobei schon beim Einbringen der jeweiligen Datenleitung festgelegt ist, welchen Verwendungszweck diese später haben kann. Nachträgliche Änderungen der Datenleitung sind nicht möglich, ohne diese vollständig zu ersetzen.

Der Erfindung liegt daher die Aufgabe zugrunde, eine vielseitig verwendbare Möglichkeit zu schaffen, eine Hausanschlussleitung mit einer weiteren Leitung zu ergänzen, die einfach und kostengünstig auch nachträglich austauschbar ist.

Diese Aufgabe wird durch ein Leitungssystem nach Anspruch 1 gelöst.

Bei einem Leitungssystem, mit einer ersten Hausanschlussleitung, die als Rohrleitung ausgeführt ist, durch die ein Gas oder Wasser geführt wird und einer zweiten Leitung, wobei der Außendurchmesser der zweiten Leitung geringer ist als der Innendurchmesser der Hausanschlussleitung, wobei die erste, äußere Hausanschlussleitung und die zweite, innere Leitung durch ein Verbindungsstück zu einer kombinierten Leitung zusammengeführt sind und als kombinierte Leitung an einem weiteren Verbindungsstück wieder heraustreten, wobei die kombinierte Leitung an ihren beiden Enden jeweils an ein Verbindungsstück angeschlossen ist, wobei die zweite Leitung in der Hausanschlussleitung geführt wird, wobei die erste, äußere Hausanschlussleitung und die zweite, innere Leitung durch die Verbindungsstücke an ihren Enden der Leitungen miteinander verbunden sind und durch die Hausanschlussleitung Gas oder Wasser geführt wird und durch die zweite Leitung ein Medium oder eine Telefonleitung, beispielsweise aus Kupfer oder Glasfaser, geführt wird, wobei das Verbindungsstück aufweist: einen ersten Anschluss zum Anschließen der kombinierten Leitung bestehend aus der Hausanschlussleitung und der zweiten Leitung, einen zweiten Anschluss zum Anschluss an die Hausanschlussleitung des ersten Anschlusses, und einen dritten Anschluss zum Anschluss an die zweite Leitung des ersten Anschlusses, ist als wesentlich vorgesehen, dass die zweite Leitung wie die Hausanschlussleitung als Rohrleitung ausgeführt ist, wobei Rohrleitungen starr ausgeführt sind und einen konstanten Querschnitt, unabhängig vom Innendruck des sie durchströmenden Mediums und des jeweiligen Außendrucks, bilden, so dass die kombinierte Leitung zwischen den Verbindungsstücken mediendicht und druckbeaufschlagbar ist und die zweite Leitung besonders einfach durch eine geradlinig verlaufende stabile, äußere Hausanschlussleitung hindurch führbar ist, dass die von den beiden Anschlüssen, an denen die Hausanschlussleitung und die zweite Rohrleitung einzeln angeschlossen sind, abgehende Hausanschlussleitung und die zweite Rohrleitung parallel zueinander und parallel zu der kombinierten Leitung verlaufen, und dass die Verbindungsstücke als T-Stück ausgeführt sind.

Ein Vorteil des erfindungsgemäßen Leitungssystems besteht darin, dass lediglich die erste, äußere Hausanschlussleitung Kontakt zum Erdreich hat. Hierdurch kann eine zweite, innere Leitung innerhalb der ersten, äußeren Hausanschlussleitung so geführt werden, dass sie von einem der gemeinsamen Enden des Leitungssystems herausgezogen oder nachträglich eingezogen werden kann, da die erste, äußere Hausanschlussleitung einen Tunnel bildet und die zweite, innere Leitung nicht vom Erdreich gehalten wird. Ist die erste, äußere Hausanschlussleitung durch Tiefbauarbeiten verlegt worden, so ist bei dem erfindungsgemäßen Leitungssystem auch nachträglich ein Zugang zum Inneren der ersten, äußeren Hausanschlussleitung möglich, ohne erneut Tiefbauarbeiten über die gesamte Länge der ersten, äußeren Hausanschlussleitung durchführen zu müssen. Vielmehr sind lokale Tiefbauarbeiten z.B. in Form einer einzelnen Baugrube ausreichend, um einen Zugang zu der ersten, äußeren Hausanschlussleitung zu erhalten. Von diesem Zugang kann nun eine beschädigte zweite, innere Leitung entfernt, repariert und erneut eingezogen werden, eine vorhandene zweite, innere Leitung gegen eine andere zweite, innere Leitung ausgetauscht werden oder auch eine erste, zweite innere Leitung oder weitere zweite, innere Leitung in die erste, äußere Hausanschlussleitung eingezogen werden. Durch entsprechende Arbeiten am anderen Ende der ersten, äußeren Hausanschlussleitung, z.B. im Inneren des Gebäudes des Anschlussnehmers, kann dort die zweite, innere Leitung wieder aus der ersten, äußeren Hausanschlussleitung ausgekoppelt werden. Auf diese Weise kann durch einmalige aufwendige, kostenintensive und störende Tiefbauarbeiten mittels einer einzigen Leitung ein Zugang zum Anschlussnehmer geschaffen werden, über den im Nachhinein weitere leitungsgebundene Versorgungsleistungen ergänzt oder ausgetauscht werden können, ohne erneut Tiefbauarbeiten durchführen zu müssen.

Ferner können für die zweiten, inneren Leitungen auch andere und u.U. günstigere Materialien verwendet werden, da lediglich die erste, äußere Hausanschlussleitung mit dem Erdreich in Kontakt kommt und gegen Beschädigungen durch Korrosion, Kleintiere oder Insekten, das Eindringen von Feuchtigkeit, den Befall durch Schimmel oder Ähnliches geschützt sein muss. Die Außenhaut der zweiten, inneren Leitungen kann daher auf das sie umströmende Medium ausgerichtet werden, welches sich in der ersten, äußeren Hausanschlussleitung befindet, da die Außenhaut der zweiten, inneren Leitungen ausschließlich mit diesem Medium und nicht mit dem Erdreich in Kontakt kommt. Hierdurch kann eine Kostenreduzierung bei der Ummantelung der zweiten, inneren Leitungen durch die Verwendung einfacherer Materialien ebenso erreicht werden wie durch eine Materialersparnis, die auch zu einer Reduzierung des Außendurchmessers der zweiten, inneren Leitungen führt.

Gemäß einem Aspekt der Erfindung sind die erste, äußere Hausanschlussleitung und die zumindest eine zweite, innere Leitung als Rohrleitungen ausgeführt. Rohrleitungen sind starr ausgeführt und bilden einen konstanten Querschnitt, unabhängig vom Innendruck des sie durchströmenden Mediums und des Außendrucks des auf sie drückenden Erdreiches. Sie bilden sozusagen einen stabilen Tunnel durch das Erdreich, weshalb eine Rohrleitung als erste, äußere Hausanschlussleitung einen stabilen Hohlraum bildet, durch den sehr einfach weitere Rohrleitungen hindurchgeführt werden können, insbesondere falls die äußere Hausanschlussleitung geradlinig zwischen zwei Punkten, wie dem Gebäudeanschluss des Anschlussnehmers und einem Anschlusspunkt an das Versorgungsnetz des Versorgungsunternehmens, verläuft. Dabei ist auch die Ausführung der zweiten, inneren Leitungen als Rohrleitungen vorteilhaft, da sich diese besonders einfach durch eine gradlinig verlaufende stabile erste, äußere Hausanschlussleitung hindurch schieben lassen und nicht verknicken oder verkanten, was bei flexiblen Leitungen insbesondere dann der Fall sein kann, falls diese zuvor auf einer Rolle aufgerollt waren und dadurch eine Eigenspannung aufweisen, durch die sich die Leitungen wieder zusammenrollen.

Gemäß einem weiteren Aspekt der Erfindung weisen die erste, äußere Hausanschlussleitung und die zweite, innere Leitung ein Verbindungsstück auf. Dieses Verbindungsstück weist einen ersten Anschluss auf zum Anschluss der ersten Hausanschlussleitung und der zweiten, inneren Leitung, einen zweiten Anschluss zum Anschluss an die erste Hausanschlussleitung des ersten Anschlusses und einen dritten Anschluss zum Anschluss an die zweite Leitung des ersten Anschlusses auf.

Hierdurch wird es ermöglicht, die erste, äußere Hausanschlussleitung und die zweite, innere Leitung durch das Verbindungsstück zu einer kombinierten Leitung zusammenzuführen. Dabei werden die erste, äußere Hausanschlussleitung und die zweite, innere Leitung am ersten Anschluss des Verbindungsstücks gemeinsam angeschlossen, sodass die zweite, innere Leitung innerhalb der ersten, äußeren Hausanschlussleitung an den ersten Anschluss des Verbindungsstücks angeschlossen wird und die erste, äußere Hausanschlussleitung am ersten Anschluss des Verbindungsstücks die zweite, innere Leitung umschließt. Der zweite und dritte Anschluss des Verbindungsstücks ist jeweils mit dem ersten Anschluss so verbunden, dass die erste, äußere Hausanschlussleitung und zweite, innere Leitung einerseits gemeinsam am ersten Anschluss an das Verbindungsstück angeschlossen sind, die beiden Leitungen jedoch andererseits durch jeweils einen eigenen separaten Anschluss voneinander getrennt an den zweiten und dritten Anschluss angeschlossen sind. Dies ermöglicht jeweils den Zugang zu beiden Leitungen mittels des Verbindungsstückes, während innerhalb des kombinierten Leitungssystems ein Zugang zur zweiten, inneren Leitung nur durch die erste, äußere Hausanschlussleitung hindurch erfolgen kann.

Gemäß einem weiteren Aspekt der Erfindung ist das Verbindungsstück derart ausgebildet, dass ein Gas oder eine Flüssigkeit, und eine zweite, innere Leitung durch die erste, äußere Hausanschlussleitung vom ersten Anschluss des Verbindungsstücks zum zweiten Anschluss des Verbindungsstücks geführt wird, und dass ein Gas oder eine Flüssigkeit, ein Kabel oder eine weitere Leitung durch die zweite, innere Leitung vom ersten Anschluss des Verbindungsstücks zum dritten Anschluss des Verbindungsstücks geführt wird.

Das erfindungsgemäße Leitungssystem kann auch durch Nachrüstung einer bestehenden Hausanschlussleitung hergestellt werden, indem nämlich in die bestehende Hausanschlussleitung die zweite Leitung, also die zweite Rohrleitung eingebracht wird, z.B. indem diese zweite Rohrleitung durch die Hausanschlussleitung geschoben wird.

An einer bestimmten Stelle wird dann die zweite Rohrleitung in die Hausanschlussleitung eingekoppel und/oder ausgekoppelt, wobei hierzu vorzugsweise entsprechende Verbindungsstücke vorgesehen sind, wie sie in der vorliegenden Anmeldung beschrieben und dargestellt sind. Der Vorteil der Nachrüstung besteht vor allem darin, dass umfangreichste Erdarbeiten dabei vermieden werden, denn die zweite Rohrleitung lässt sich ohne Weiteres in die Hausanschlussleitung einschieben und dabei können beim Verschieben gleich zehn bis zwanzig oder mehr Meter lange zweite Rohrleitungen verlegt werden, so dass nur an zwei ganz bestimmten Stellen, nämlich dort, wo die zweite Rohrleitung in die Hausanschlussleitung eingekoppelt wird und/oder ausgekoppelt wird, Erdarbeiten verrichtet werden müssen, um die Verbindungsstücke an der Hausanschlussleitung anzubringen. Die Erfindung verfolgt mit der in dieser Anmeldung offenbarten Rohr-in-Rohrtechnik auch das Ziel, dass innerhalb der zweiten, also der inneren Rohrleitung, ein Telefonkabel, eventuell auch Stromkabel oder auch ein anderes Medium geführt werden kann, wobei das Kabel oder das weitere Medium von dem Medium, welches durch die Hausanschlussleitung strömt, komplett abgeschottet ist und somit sich innerhalb der zweiten Rohrleitung auch ein anderer Druck, z.B. Atmosphärendruck, einstellen kann als innerhalb der Hausanschlussleitung oder außerhalb der zweiten Rohrleitung.

In der Norm DIN EN 60794-3-60 ist ein Beispiel aufgezeigt, wo ein Lichtwellenleiterkabel unmittelbar vom Wasser einer Trinkwasserleitung umströmt ist, diese Ausführung kann jedoch zur Beschädigung des Lichtwellenleiterkabels führen, wenn die Strömungsgeschwindigkeit zu groß ist und damit zu große Kräfte auf den Lichtwellenleiter einwirken. Bei der Erfindung entgegen bleibt das verlegte LWL-Kabel innerhalb der zweiten Rohrleitung vom Gas oder auch vom strömenden Wasser komplett unberührt.

Eine derartige Ausgestaltung des Verbindungsstücks ermöglicht es, nicht nur verschiedene Kabel oder Leitungen (Rohre) in der ersten, äußeren Hausanschlussleitung und zweiten, inneren Leitung parallel zueinander zu führen, sondern auch gasförmige oder flüssige Stoffe, wie z.B. Gas, Wasser oder Abwasser in einer der Leitungen zu führen und gleichzeitig einen weiteren gasförmigen oder flüssigen Stoff in der anderen Leitung. So wäre es möglich, in nur einer kombinierten Leitung z.B. sowohl Wasser zum Gebäude des Anschlussnehmers hin als auch Abwasser vom Gebäude weg zu transportieren. Ferner könnte auch die erste, äußere Hausanschlussleitung einer kombinierten Leitung für die Zufuhr von Gas verwendet werden, während gleichzeitig in der zweiten, inneren Leitung Kupfer-oder Glasfaserkabel (LWL-Kabel) für den Telefon- oder Kabelfemsehanschluss laufen. Dabei können diese Versorgungsmöglichkeiten beliebig miteinander kombiniert werden. Auch könnten durch mehrere innere Leitungen, die ineinander verschachtelt oder gemeinsam in der ersten, äußeren Hausanschlussleitung angeordnet sind, mehrere Versorgungen miteinander kombiniert werden.

Ausführungsbeispiele und Vorteile der Erfindung werden nachstehend unter Bezugnahme auf folgende Figuren näher erläutert:
Fig. 1 zeigt eine schematische Darstellung einer ersten, äußeren Hausanschlussleitung und einer zweiten, inneren Leitung.
Fig. 2 zeigt eine schematische Darstellung eines Verbindungsstücks mit einer ersten, äußeren Hausanschlussleitung und einer zweiten, inneren Leitung; und
Fig. 3 zeigt eine schematische Darstellung eines Verbindungsstücks mit einer ersten, äußeren Hausanschlussleitung und einer zweiten, inneren Leitung gemäß einem Ausführungsbeispiel der Erfindung.

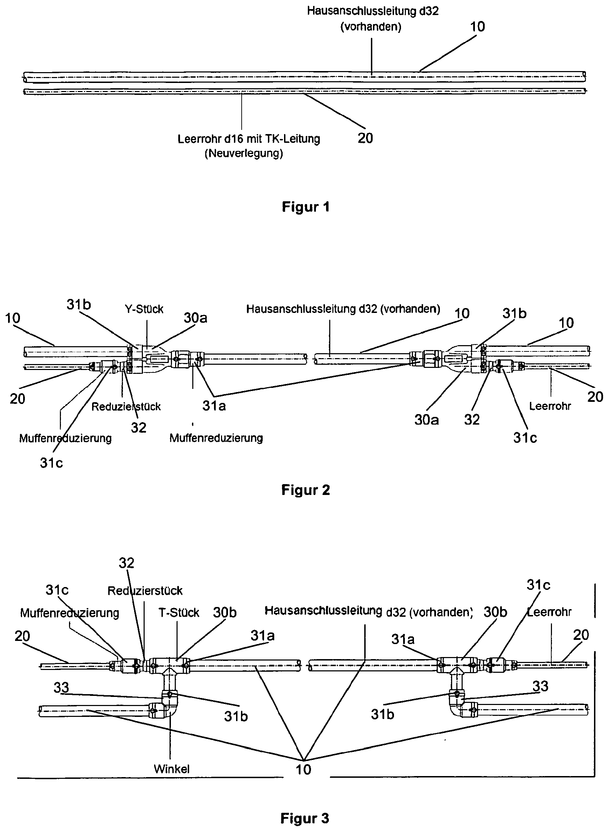

Fig. 1 zeigt eine erste, äußere Hausanschlussleitung (10) und eine zweite, innere Leitung (20). Dabei ist die erste, äußere Hausanschlussleitung (10) eine Hausanschlussleitung d32 und die zweite, innere Leitung (20) eine Hausanschlussleitung d16. Beide Leitungen (10, 20) sind als Rohrleitungen ausgeführt. Sie können daher aufgrund des unterschiedlichen Durchmessers ineinander geschoben werden. Hierdurch ist es möglich, die zweite, innere Leitung (20) d16 in eine bereits im Erdreich vorhandene erste, äußere Hausanschlussleitung (10) d32 nachträglich einzuschieben. Diese zweite, innere Leitung (20) d16 kann dabei zum Transport eines zweiten Mediums dienen oder auch als Zweite, innere Leitung, durch die dann wiederum z.B. Kabel gezogen und zum Gebäude des Anschlussnehmers geführt werden können.

Fig. 2 zeigt eine Zusammenführung bzw. Wiederauftrennung der ersten, äußeren Hausanschlussleitung (10) und der zweiten, inneren Leitung (20) mittels eines Verbindungsstücks (30a) als Y-Stück. Dabei werden zunächst links die beiden separaten Leitungen (10, 20) an jeweils einem Anschluss (31b, 31c) an das Y-Verbindungsstück (30a) angeschlossen. Diese beiden Leitungen (10, 20) treten dann gemeinsam als kombinierte Leitung an einem weiteren

Anschluss (31a) aus dem Y-Verbindungsstück (30a) wieder heraus, wobei die zweite, innere Leitung (20) in der ersten, äußeren Hausanschlussleitung (10) geführt wird. Rechts wird die zweite, innere Leitung (20) mittels eines weiteren Y-Verbindungsstücks (30a) wieder durch den einen separaten Anschluss (31b) aus der kombinierten Leitung herausgeführt. Der Anschluss der beiden Leitungen (10, 20), die in dem Ausführungsbeispiel nach Fig. 1 einen Durchmesser von 16 mm bzw. 32 mm aufweisen, an das Y-Verbindungsstück (30a) erfolgt in dem Ausführungsbeispiel nach Fig. 2 mittels verschiedener Muffenreduzierungen an den Anschlüssen (31a, 31b, 31c) bzw. mit einem Reduzierstück (32). Auf diese Weise kann ein Y-Verbindungsstück (30a) mit einheitlichen Maßen der Anschlüsse (31a, 31b, 31c) vorgesehen werden, was die Herstellungskosten reduziert, da die Anpassung an die Durchmesser der Leitungen (10, 20) mittels der Muffenreduzierungen bzw. eines Reduzierstücks (32) an den Anschlüssen (31a, 31b, 31c) je nach Anwendungsfall erfolgt.

Fig. 3 zeigt eine Zusammenführung bzw. Wiederauftrennung der ersten, äußeren Hausanschlussleitung (10) und der zweiten, inneren Leitung (20) mittels eines Verbindungsstücks (30b) als T-Stück. Dieses T-Verbindungsstück (30b) unterscheidet sich von dem Y-Verbindungsstück (30a) dadurch, dass die beiden Anschlüsse (31b, 31c), an denen die separaten Leitungen einzeln angeschlossen sind, ungefähr einen rechten Winkel zueinander bilden. Dabei ist an einem der beiden Anschlüsse (31b, 31c) ein Winkelstück (33) vorgesehen, um die beiden Leitungen (10, 20) wie beim Y-Verbindungsstück (30a) parallel verlaufen zu lassen. Die weiteren Elemente und Bezugszeichen des T-Verbindungsstücks (30b) des Ausführungsbeispiels der Erfindung entsprechen denen des Y-Verbindungsstücks (30a).

Eine mögliche Anwendung der erfindungsgemäßen kombinierten Leitung wäre z.B. eine bereits vorhandene, d.h. im Erdreich vergrabene Hausanschlussleitung d32 als erste, äußere Hausanschlussleitung (10) der kombinierten Leitung zu nutzen. Hierzu wäre der Zugang zu den beiden Enden der vergrabenen Hausanschlussleitung d32 (10) zum einen z.B. an der Stelle nötig, an der die vergrabene Hausanschlussleitung d32 (10) in das Gebäude des Anschlussnehmers geführt wird, sowie andererseits an einer zweiten Stelle, von der sich die zweite, innere Leitung d16 (20) in die vergrabene Hausanschlussleitung d32 (10) einführen ließe. An beiden Stellen wäre lediglich eine Baugrube nötig, um den ausreichenden Zugang zum Einziehen der zweiten, inneren Leitung d16 (20) zu erhalten, anstelle von einer vollständigen Eröffnung des Erdreichs über die gesamte Länge der vergrabenen Hausanschlussleitung d32 (10).

Ist ein Zugang zu der vergrabenen Hausanschlussleitung d32 (10) geschaffen, so kann die zweite, innere Leitung d16 (20) in die vergrabene Hausanschlussleitung d32 (10) eingezogen werden. Hierbei ist gegebenenfalls darauf zu achten, dass bei dem Einziehen der zweiten, inneren Leitung d16 (20) keine Verunreinigung der vergrabenen Hausanschlussleitung d32 (10) verursacht wird, um die Versorgung mit den entsprechenden gasförmigen oder flüssigen Medien nicht zu beeinträchtigen.

Ist die kombinierte Leitung hergestellt, so müssen an beiden Enden der kombinierten Leitung die separaten Zugänge zu der äußeren Hausanschlussleitung d32 (10) und der inneren Leitung d16 (20) vorgesehen werden. Hierzu ist über das T-Verbindungsstück (30b) eine gas- und flüssigkeitsdichte, getrennte Zuführung von zwei unterschiedlichen Medien in die äußere Hausanschlussleitung d32 (10) und die innere Leitung d16 (20) ermöglicht. Auf diese Weise kann in eine vorhandene, bereits vergrabene Hausanschlussleitung d32 (10) eine weitere innere Leitung d16 (10) nachträglich eingezogen und so die Möglichkeit der Zuführung einer weiteren Versorgungsdienstleistung zu dem Anschlussnehmer geschaffen werden, ohne hierzu aufwendige, teure und störende Tiefbauarbeiten erneut durchführen zu müssen.

Der Gedanke der Erfindung betrifft die Sanierung oder Neuerstellung von Netzanschlüssen in leitungsgebundenen Versorgungsbereichen (z.B. Gas, Wasser), die für den Anschlussnehmer sowie für den Netzbetreiber mit hohen Kosten (Tiefbaukosten etc.) verbunden sind. Ferner sind die Tiefbauaktivitäten mit Unannehmlichkeiten, wie zeitweise keine Zufahrt zum Gebäude, ggf. Neunpflanzungen im Garten notwendig etc., für den Anschlussnehmer verbunden.

Durch eine innovative kombinierte Rohrleitungsnutzung einer bereits vorhandenen bzw. neu zu errichtenden Rohrleitung mit einer zweiten oder mehreren neuen zu verlegenden Rohrleitungen können die erforderlichen Aufwände (Tiefbau etc.) erheblich reduziert werden. Bei der kombinierten Rohrleitungsnutzung wird eine Rohrleitung mit kleinerem Durchmesser (Innenrohr) in eine Rohrleitung größeren Durchmessers (Außenrohr) eingekoppelt und nach Überbrückung einer Distanz wieder ausgekoppelt. Es besteht auch die Möglichkeit, mehrere Innenrohre in das Außenrohr einzubringen. Diese kombinierte Rohrleitungsnutzung ermöglicht es, zwei oder mehrere unterschiedliche Medien aufzunehmen und diese zum Kunden zu leiten. Die Auskopplung der Rohrleitungen mit kleinerem Durchmesser (Innenrohr) aus der Rohrleitung mit dem größeren Durchmesser (Außenrohr) kann vor oder auch im Kundengebäude realisiert werden. Eine Kombination von unterschiedlichsten Medien mit unterschiedlichen Aggregatzuständen und Drücken ist möglich, ob Gase, Flüssigkeiten oder auch Kabelleitungen. Hindernisse und Unwägbarkeiten auf der Trasse können ohne erhöhten Aufwand überbrückt werden.

Zur Ein- und Auskopplung des Innenrohrs bzw. der Innenrohre in das Außenrohr ist jeweils an den Kopfenden der Kombinationstrasse ein lokaler Tiefbau in Form einer der Rohrdimension angepassten Baugrube erforderlich.

Es erfolgt bei vorhandenen Rohrleitungen eine Trennung des Stranges am Ein- und Auskoppelpunkt durch den Einbau eines Abzweigstückes (T-Stückes). Der Abschluss wird so hergestellt, dass auch das Außenrohr wieder mediendicht und druckbeaufschlagbar ist. Ein Medientausch im Innenrohr kann unabhängig vom Außenrohr durchgeführt werden. Das Außenrohr müsste dazu nicht außer Betrieb genommen werden. Gleiches gilt auch bei einem Medientausch im Außenrohr. Hierfür müsste das Innenrohr ebenfalls nicht außer Betrieb gesetzt werden.

Der primäre Vorzug dieser Innovation liegt im Bereich der Kostenersparnisse. Die kombinierte Rohrleitungsnutzung ermöglicht es, die sonst notwendigen großen und kostenintensiven Tiefbaudistanzen zu überbrücken. Bei der kombinierten Rohrleitungsnutzung reduzieren sich die Tiefbauaufwände auf die Baugruben für die Ein- bzw. Auskopplung des bzw. der Innenrohre.

Soweit in der vorliegenden Anmeldung eine kombinierte Rohrleitungsnutzung erwähnt ist, bei der in einem äußeren Rohr (Hausanschlussleitung) eine Rohrleitung mit kleinerem Durchmesser (Innenrohr) in dem Außenrohr verlegt ist, bedeutet dies auch, dass eine Leitung, die in dem Innenrohr verlegt ist, auf der gesamten Strecke zwischen der Einkopplung in das Außenrohr und der Auskopplung aus dem Außenrohr nicht in Berührung zu dem Medium ist, welches das Außenrohr durchströmt, z.B. Wasser, Gas etc.

## Patentansprüche

1. Leitungssystem, mit einer ersten Hausanschlussleitung (10), die als Rohrleitung ausgeführt ist, mit mindesten zwei Verbindungsstücke (30b) und mit einer zweiten Leitung (20),
wobei der Außendurchmesser der zweiten Leitung (20) geringer ist als der Innendurchmesser der Hausanschlussleitung (10),
wobei die erste, äußere Hausanschlussleitung (10) und die zweite, innere Leitung (20) durch ein Verbindungsstück (30b) zu einer kombinierten Leitung zusammengeführt sind und als kombinierte Leitung an einem weiteren Verbindungsstück wieder heraustreten,
wobei die kombinierte Leitung (10, 20) an ihren beiden Enden jeweils an ein Verbindungsstück (30b) angeschlossen ist,
wobei die zweite Leitung (20) in der Hausanschlussleitung (10) geführt wird,
wobei die erste, äußere Hausanschlussleitung (10) und die zweite, innere Leitung (20) durch die Verbindungsstücke (30b) an ihren Enden der Leitungen (10, 20) miteinander verbunden sind und durch die Hausanschlussleitung (10) Gas oder Wasser geführt wird und durch die zweite Leitung (20) ein Medium oder eine Telefonleitung, beispielsweise aus Kupfer oder Glasfaser, geführt wird,
wobei die Verbindungsstücke (30b) jeweils aufweisen: einen ersten Anschluss (31a) zum Anschließen der kombinierten Leitung bestehend aus der Hausanschlussleitung (10) und der zweiten Leitung (20),
einen zweiten Anschluss (31b) zum Anschluss an die Hausanschlussleitung (10) des ersten Anschlusses (31a), und
einen dritten Anschluss (31c) zum Anschluss an die zweite Leitung (20) des ersten Anschlusses (31a),
wobei die zweite Leitung (20) wie die Hausanschlussleitung (10) als Rohrleitung ausgeführt ist, wobei die Rohrleitungen starr ausgeführt sind und einen konstanten Querschnitt, unabhängig vom Innendruck des sie durchströmenden Mediums und des jeweiligen Außendrucks, bilden, so dass die kombinierte Leitung zwischen den Verbindungsstücken (30b) mediendicht und druckbeaufschlagbar ist und die zweite Leitung (20) besonders einfach durch eine geradlinig verlaufende stabile, äußere Hausanschlussleitung (10) hindurch führbar ist,
wobei die von den beiden Anschlüssen (31b, 31c), an denen die Hausanschlussleitung (10) und die zweite Rohrleitung (20) einzeln angeschlossen sind, abgehende Hausanschlussleitung (10) und die zweite Rohrleitung (20) parallel zueinander und parallel zu der kombinierten Leitung verlaufen, und
wobei die Verbindungsstücke (30a, 30b) als T-Stück ausgeführt sind.

2. Leitungssystem nach Anspruch 1,
**dadurch gekennzeichnet, dass** das Verbindungsstück (30b) derart ausgebildet ist,
dass ein Gas oder eine Flüssigkeit, ein Kabel oder eine weitere Leitung durch die Hausanschlussleitung (10) vom ersten Anschluss (31a) des Verbindungsstücks (30b) zum zweiten Anschluss (31 b) des Verbindungsstücks (30b) geführt wird, und
dass ein Gas oder eine Flüssigkeit, ein Kabel oder eine weitere Leitung durch die zweite Leitung (20) vom ersten Anschluss (31a) des Verbindungsstücks (30b) zum dritten Anschluss (31c) des Verbindungsstücks (30b) geführt wird.

## Claims

1. Pipe system, with a first house connection or domestic service pipe (10), which is provided as a tube with at least two connecting pieces (30b) and with a second pipe (20),
wherein the outer diameter of the second pipe (20) is smaller than the inner diameter of the domestic service pipe (10),
wherein the first, outer domestic service pipe (10) and the second, inner pipe (20) are brought together by a connecting piece (30b) to form a combined pipe and emerge again as a combined pipe at a further connecting piece,
the combined pipe (10, 20) being connected at its two ends to a connecting piece (30b), respectively,
wherein the second pipe (20) is guided in the domestic service pipe (10),
wherein the first, outer domestic service pipe (10) and the second, inner pipe (20) are connected to each other by the connecting pieces (30b) at their ends of the pipes (10, 20) and gas or water is led through the domestic service pipe (10) and a medium or a telephone line, for example made of copper or glass fiber, is led through the second pipe (20),
wherein the connecting pieces (30b) each comprise: a first port (31a) for connecting the combined pipe consisting of the domestic service pipe (10) and the second pipe (20),
a second port (31b) for connection to the domestic service pipe (10) of the first port (31a), and a third port (31c) for connection to the second pipe (20) of the first connection (31a), wherein the second pipe (20), like the domestic service pipe (10), is provided as a tube, wherein the tubes are of rigid design and provide a constant cross-section, irrespective of the internal pressure of the medium flowing through them and of the respective external pressure, so that the combined pipe between the connecting pieces (30b) is media-tight and can be pressurized, and the second pipe (20) can be guided through a stable, outer domestic service pipe (10), which runs in a straight line, in a particularly simple manner,
wherein the domestic service pipe (10) and the second pipe (20) leaving the two ports (31b, 31c) to which the domestic service pipe (10) and the second pipe (20) are individually connected run parallel to one another and parallel to the combined pipe, and
wherein the connecting pieces (30a, 30b) are designed as T-pieces.

2. Pipe system according to claim 1,
**characterized in that** the connecting piece (30b) is designed such,
that a gas or a liquid, a cable or a further pipe is led through the domestic service pipe (10) from the first port (31a) of the connection piece (30b) to the second port (31b) of the connection piece (30b), and
that a gas or a liquid, a cable or a further conduit/pipe is led through the second pipe (20) from the first port (31a) of the connecting piece (30b) to the third port (31c) of the connecting piece (30b).

## Revendications

1. Système de conduite, avec une première conduite de raccord domestique (10), qui est conçue comme une conduite de tuyau avec au moins deux pièces de raccord (30b) et avec une deuxième conduite (20),
dans lequel le diamètre extérieur de la deuxième conduite (20) est plus petit que le diamètre intérieur de la conduite de raccord domestique (10),
dans lequel la première conduite de raccord domestique (10), extérieure, et la deuxième conduite (20), intérieure, sont réunies par une pièce de raccord (30b) pour former une conduite combinée et ressortent à nouveau comme une conduite combinée au niveau d'une autre pièce de raccord,
dans lequel la conduite combinée (10, 20) est reliée à chacune de ses deux extrémités à une pièce de raccord (30b),
dans lequel la deuxième conduite (20) est guidée dans tuyau de raccord domestique (10), dans lequel la première conduite de raccord domestique (10) extérieure et la deuxième conduite (20) intérieure sont reliées entre elles par les pièces de raccord (30b) à leurs extrémités, et du gaz ou de l'eau passe par la conduite de raccord domestique (10) et un fluide ou une ligne téléphonique, par exemple en cuivre ou en fibre de verre, passe par la deuxième conduite (20),
dans lequel les pièces de raccord (30b) comprennent respectivement :
un premier raccordement (31a) pour raccorder la conduite combinée constituée par la conduite de raccord domestique (10) et la deuxième conduite (20),
un deuxième raccordement (31b) pour le raccordement à la conduite de raccord domestique (10) du premier raccordement (31a), et
un troisième raccordement (31c) pour le raccordement à la deuxième conduite (20) du premier raccordement (31a),
dans lequel la deuxième conduite (20), comme la conduite de raccord domestique (10), est conçue comme une conduite de tuyau, les conduites de tuyau étant rigides et formant une section transversale constante, indépendamment de la pression intérieure du fluide qui les traverse et de la pression extérieure respective, de sorte que la conduite combinée entre les pièces de raccord (30b) est étanche aux fluides et peut être mise sous pression, et que la deuxième conduite (20) peut être guidée de manière particulièrement simple à travers une conduite de raccord domestique (10) droite, stable et extérieure,
dans lequel la conduite de raccord domestique (10) et la deuxième conduite (20), qui partent des deux raccordements (31b, 31c) auxquels la conduite de raccord domestique (10) et la deuxième conduite (20) sont reliés individuellement, sont parallèles entre eux et parallèles à la conduite combinée, et
dans lequel les pièces de raccord (30a, 30b) sont conçues comme des pièces en T.

2. Système de conduite selon la revendication 1, **caractérisé en ce que** la pièce de raccord (30b) est formée de telle manière qu'un gaz ou un liquide, un câble ou une autre conduite est conduit par la conduite de raccord domestique (10) depuis le premier raccordement (31a) de la pièce de raccord (30b) jusqu'au deuxième raccordement (31b) de la pièce de raccord (30b), et qu'un gaz ou un liquide, un câble ou une autre conduite est conduit par la deuxième conduite (20) depuis le premier raccordement (31a) de la pièce de raccord (30b) jusqu'au troisième raccordement (31c) de la pièce de raccord (30b).
